Europäisches Patentamt

European Patent Office

Office européen des brevets

(11) Veröffentlichungsnummer: **0 306 830 B1**

(12) **EUROPÄISCHE PATENTSCHRIFT**

(45) Veröffentlichungstag der Patentschrift: **02.12.92**

(21) Anmeldenummer: **88114263.2**

(22) Anmeldetag: **01.09.88**

(51) Int. Cl.⁵: **G01B 21/04**, G01B 5/00

(54) **Koordinaten-Messmaschine.**

(30) Priorität: **05.09.87 DE 3729813**

(43) Veröffentlichungstag der Anmeldung:
**15.03.89 Patentblatt 89/11**

(45) Bekanntmachung des Hinweises auf die
Patenterteilung:
**02.12.92 Patentblatt 92/49**

(84) Benannte Vertragsstaaten:
**DE FR GB IT**

(56) Entgegenhaltungen:
**CH-A- 654 781**
**DE-A- 2 843 503**
**DE-A- 3 121 363**
**US-A- 3 977 266**
**US-A- 4 561 624**

(73) Patentinhaber: **Mauser-Werke Oberndorf
GmbH
Teckstrasse 11
W-7238 Oberndorf(DE)**

(72) Erfinder: **Band, Gerhard
Dammstrasse 18
W-7238 Oberndorf(DE)**
Erfinder: **Broghammer, Heinz
Auf der Eck 4
W-7214 Zimmern(DE)**

(74) Vertreter: **Hofmann, Gerhard, Dipl.-Ing. Patentassessor et al
Stephanstrasse 49
W-8500 Nürnberg 30(DE)**

EP 0 306 830 B1

## Beschreibung

Die Erfindung betrifft eine Koordinaten-Meßmaschine mit einer Antriebs-und Bremseinrichtung der in Z-Richtung mittels einer Gewindespindel verfahrbaren Pinole.

Durch die DE-A-3121363 ist eine Antriebseinrichtung an einer Koordinaten-Meßmaschine offenbart, welche der Bewegung einer Pinole in Z-Richtung mittels einer Gewindespindel dient. Bei der Druckschrift DE-A-3514961 geht es darum, daß bei einer derartigen Antriebseinrichtung ein Radialschlag der Gewindespindel nicht auf die Pinole übertragen wird und zusätzlich eine Taumelachsenbewegung möglich ist. Über den Antrieb und das Abbremsen der Gewindespindel für die Bewegung der Pinole ist in dieser Druckschrift jedoch nichts ausgesagt worden.

In der Praxis war es bisher bekannt, einen Elektromotor mit einer Bremse für den Antrieb der Gewindespindel einzusetzen. Die Antriebskraft wurde dabei von der Motorwelle über eine Metallbalgkupplung auf eine Steckwelle übertragen, auf welcher eine Permanentmagnetbremse und ein breites Antriebsrad für zwei Riemen gelagert wurden. Für diesen Doppelriemenantrieb waren eine zweifache Riemenüberwachung und zweifache Riemenspanner notwendig.

Ausgehend von dem vorgenannten Stand der Technik ist es Aufgabe der Erfindung, eine Koordinaten-Meßmaschine mit einer Antriebs- und Bremseinrichtung der eingangs genannten Art zu schaffen, die von einfacher Bauart ist und direkt auf die Gewindespindel für die in Z-Richtung verfahrbare Pinole wirkt.

Erfindungsgemäß wird diese Aufgabe dadurch gelöst, daß die achsparallel zueinander angeordneten Motorabtriebswelle und Gewindespindel durch einen Riementrieb mit Riemenspann- und -überwachungseinrichtung miteinander in Antriebsverbindung stehen, wobei an das Riemenrad für den Antrieb der Gewindespindel eine Bremsscheibe angeflanscht ist, auf welche Bremsbacken einer Bremszange oder einer Scheibenbremse einwirken.

Dabei kann in Ausbildung der Erfindung die auf der Motorabtriebswelle gelagerte Riemenscheibe mittels einer in Langlöchern verschiebbaren und befestigbaren Motorplatte quer zur Längsachse der Motorabtriebswelle versetzbar sein. Die zweite Riemenscheibe kann gemeinsam mit der an ihr drehfest angeflanschten Bremsscheibe auf der Gewindespindel der Pinole drehfest gelagert sein. Dabei kann die zweite Riemenscheibe mit der Bremsscheibe auf der Gewindespindel durch eine Spannhülse gesichert sein. Eine weitere Sicherung ist dadurch gegeben, daß die zweite Riemenscheibe und die Bremsscheibe auf der Gewindespindel zusätzlich durch eine Mitnehmerscheibe gesichert sind, die in eine in der Gewindespindel eingearbeitete Längsnut eingreift.

In noch weiterer Ausbildung der Erfindung kann für die Überwachung der Riemenspannung und der Riemenbewegung ein Sicherheitsendschalter in Verbindung mit einem Doppelkugellager am Riemen angebaut sein. Dabei kann der Riemenspanner ein Winkelhebel sein, der unter Federkraft am Riemen mit einer Rolle oder einem Laufrad anliegt und durch eine Motoreinheit über eine zentrale Achse schwenkt. Die technische Verbesserung der Antriebs- und Bremseinrichtung liegt in der relativ einfachen Bauart und in der sicheren Funktion, weil insbesondere die Bremseinrichtung direkt auf die Gewindespindel einwirkt. Von weiterem Vorteil ist es, daß bei der gewählten Antriebseinrichtung nur ein einziger Riemen genügt, da die neue Scheibenbremse direkt auf die Gewindespindel wirkt.

Um das Spannen des Riemens in einfacher Weise zu gewährleisten, ist die Motorplatte über Langlöcher in Richtung von der großen Riemenscheibe der Gewindespindel weg verschiebbar. Die neue Riemenüberwachung mit dem Sicherheits-Endlagenschalter und einem Doppelkugellager sind zur besseren Anlage am Riemen angebaut. Die Bremsscheibe ist direkt an das zweite Riemenrad der Gewindespindel angeflanscht und gesichert. Das Riemenrad mit der Bremsscheibe ist mit einer Spannhülse mit der Gewindespindel verbunden. Zur weiteren Sicherheit dieser Verbindung und um auch bei Materialfehlern und Montagefehlern eine einwandfreie Funktion zu gewährleisten, ist entsprechend den weiteren Merkmalen der Erfindung eine spezielle Mitnehmerscheibe vorgesehen, die mit Spiel in eine in der Welle eingearbeitete Nut eingreift. Dies gewährleistet auch bei Versagen der Spannhülsenverbindung zwangsläufig eine Drehmitnahme.

In der Zeichnung ist ein Beispiel der Erfindung dargestellt.
Es zeigen:

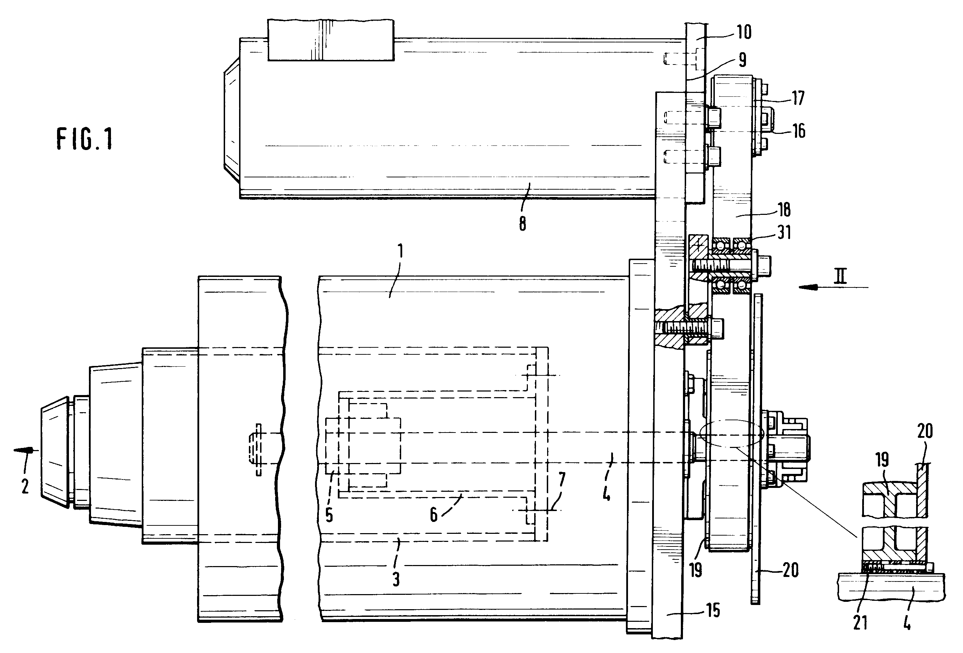

Fig. 1 die Antriebs- und Bremseinrichtung für die Gewindespindel einer Pinole an einer Koordinaten-Meßmaschine in der Seitenansicht, teilweise im Schnitt;

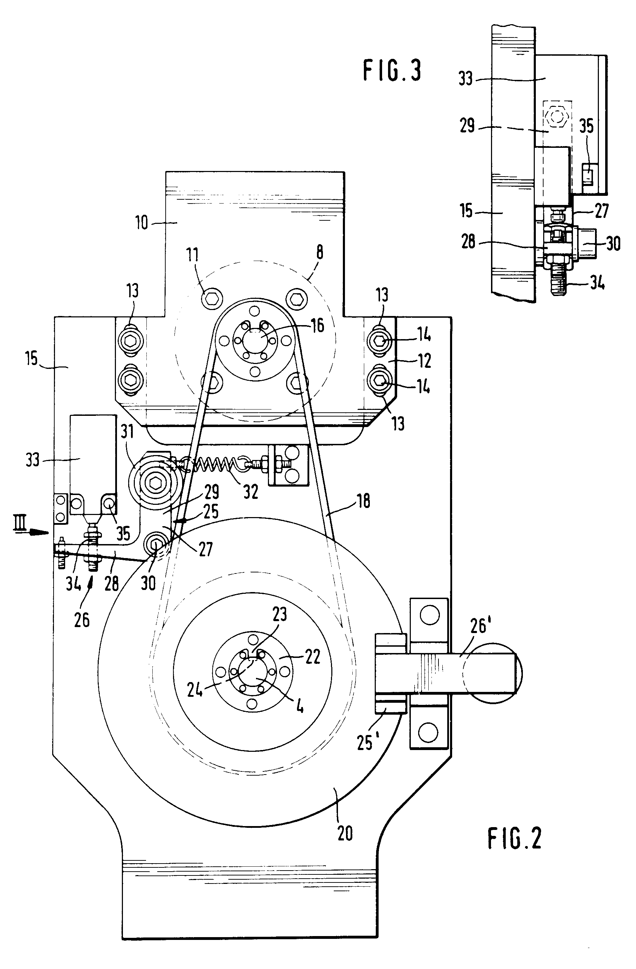

Fig. 2 die Einrichtung nach Fig. 1 entsprechend dem Pfeil II in Fig. 1;

Fig. 3 eine Ansicht auf die Riemenüberwachungseinrichtung gemäß dem Pfeil III in Fig. 2.

An einer nicht näher dargestellten Koordinaten-Meßmaschine befindet sich in einem Gehäuse 1 eine in der Z-Richtung 2 verfahrebare Pinole 3. Die Bewegung dieser Pinole 3 in Z-Richtung erfolgt über eine Gewindespindel 4, auf welcher eine Mitnahmemutter 5 axial verschieblich, jedoch drehfest angeordnet ist.

Die Mitnahmemutter 5 steht mit einem Muttergehäuse 6 in fester Verbindung, welche ihrerseits mit der Pinole bspw. durch Schrauben 7 verbunden ist.

Der Antrieb der Gewindespindel 4 erfolgt von einem Elektromotor 8, der achsparallel angeordnet ist. Mit seiner vorderen Stirnseite 9 ist der Elektromotor 8 an eine Motorplatte 10 durch Schrauben 11 angeschlossen. In Seitenlappen 12 der Motorplatte 10 befinden sich Langlöcher 13, in die Schrauben 14 eingesetzt sind, um die Motorplatte 10 zusammen mit dem Elektromotor 8 an einem ortsfesten Bauteil montieren zu können. Die Lage der Langlöcher 13 ist dabei so getroffen, daß eine Verschiebung der Motorplatte 10 zusammen mit dem Elektromotor 8 senkrecht zur achsparallelen Gewindespindel 4 erfolgen kann. Dadurch ist es schließlich möglich, eine Riemenspannung zwischen der Gewindespindel 4 und der Motorabtriebswelle 16 herbeizuführen, die stirnseitig aus dem Motor 8 und der Motorplatte 10 hervorragt.

Auf der Motorabtriebswelle 16 ist eine Riemenscheibe 17 drehfest und axial unverschieblich gelagert. Ein Endlosriemen 18 stellt die Antriebsverbindung zwischen der Riemenscheibe 17, der Motorabtriebswelle 16 und der zweiten Riemenscheibe 19 der Gewindespindel 4 dar. An diese zweite Riemenscheibe 19 ist stirnseitig eine Bremsscheibe 20 drehfest angeflanscht, was bspw. durch eine Schraubverbindung erfolgen kann. Die zweite Riemenscheibe 19 ist gemeinsam mit der Bremsscheibe 20 auf der Gewindespindel durch eine Spannhülse 21 drehgesichert. Ein zusätzliche Sicherung für eine Drehmitnahme der Riemenscheibe 19 mit Bremsscheibe 20 auf der Gewindespindel 4 geschieht durch einen Sicherungsring 22, der mit einer Nase 23 in eine Längsnut 24 der Gewindespindel 4 eingreift.

Mit der Bremsscheibe 20 stehen Bremsbacken 25' einer Bremszange 26' in Wirkverbindung, die radial außerhalb der Bremsscheibe 20 an dem ortsfesten Bauteil 15 fest montiert ist.

Die Bremsscheibe 20 ist aus Gewichtsgründen relativ schmal, bspw. nur 5 mm, ausgeführt.

Um eine für die jederzeit gesicherte Drehmitnahme der Gewindespindel 4 ausreichende Riemenspannung des Endlosriemens 18 zu erhalten, ist seitlich des Riemens 18 an dem ortsfesten Bauteil eine Riemenspanneinrichtung 25 mit einer Überwachungseinrichtung 26 für die Riemenspannung vorgesehen. Die Riemenspanneinrichtung besteht dabei aus einem Winkelhebel 27, dessen beide Schenkel 28 und 29 um die zentrale Achse 30 schwenkbar sind. An dem Hebelarm 29 ist ein Doppelkugellager 31 zur Anlage an den Riemen 18 drehbar angeordnet. Dieses Doppelkugellager 31 wird mit Hilfe einer Zugfeder 32 in ständiger Anlage an den Riemen 18 gehalten. Die Spannung des Riemens wird durch einen Sicherheitsendlagenschalter 33 überwacht, welcher mit dem zweiten Hebelarm 28 des Winkelhebels 27 durch eine Schraube 34 in Verbindung steht. Der Schalter 33 seinerseits ist wiederum mit dem ortsfesten Bauteil 15 durch Schrauben 35 verbunden.

Die Vorteile dieser Antriebs- und Bremseinrichtung für die Gewindespindel einer Pinole einer Koordinaten-Meßmaschine sind darin zu sehen, daß die erste Riemenscheibe 17 direkt auf der Motorabtriebswelle 16 gelagert ist und daß nur ein einziger Riemen als Übertragungselement dient, was dadurch möglich ist, daß diese Scheibenbremse 20, 25 direkt auf die Gewindespindel 4 für die Bewegung der Pinole 3 wirkt. Das Spannen des Riemens 18 kann in einfacher Weise durch Verschiebung der Motorplatte 10 innerhalb der Langlöcher 13 erfolgen. Eine verbesserte Anlage der Riemenspann- und der Riemenspannungsüberwachungseinrichtung wird durch die Doppelkugellager 31 und den Sicherheitsendlagenschalter 33 erzielt. Die Bremsscheibe 20 ist direkt an die zweite Riemenscheibe 19 angeschraubt und dort gesichert. Die Riemenscheibe ist gemeinsam mit der Bremsscheibe 20 mit einer Spannhülse 21 auf der Gewindespindel 4 für eine Drehmitnahme gelagert. Eine zusätzliche Sicherheit dieser Spannhülsenverbindung wird mit einer zusätzlichen Sicherungsscheibe 22 vorgenommen, um so auch bei Material- oder Montagefehlern die Drehmitnahme der Riemenscheibe 19 auf der Gewindespindel 4 zu gewährleisten.

**Patentansprüche**

1.  Koordinaten-Meßmaschine mit einer Antriebs- und Bremseinrichtung der in Z-Richtung mittels einer Gewindespindel (4) verfahrbaren Pinole (3),
    dadurch gekennzeichnet,
    daß die achsparallel zueinander angeordneten Motorabtriebswelle (16) und Gewindespindel (4) durch einen Riementrieb (16,18,19) mit Riemenspann-und -überwachungseinrichtung (25,26) miteinander in Antriebsverbindung stehen, wobei an das Riemenrad (19) für den Antrieb der Gewindespindel (4) eine Bremsscheibe (20) angeflanscht ist, auf welche Bremsscheiben (25') einer Bremszange (26') oder Scheibenbremse einwirken.

2.  Koordinaten-Meßmaschine nach Anspruch 1,
    dadurch gekennzeichnet,
    daß die auf der Motorabtriebswelle (16) gelagerte Riemenscheibe (17) mittels einer in Langlöcher (13) verschiebbaren und befestigbaren Motorplatte (10) quer zur Längsachse der Motorabtriebswelle (16) versetzbar ist.

**3.** Koordinaten-Meßmaschine nach Anspruch 1,
dadurch gekennzeichnet,
daß die zweite Riemenscheibe (19) gemeinsam mit der an ihr drehfest angeflanschten Bremsscheibe (20) auf der Gewindespindel (4) der Pinole (3) drehfest gelagert ist.

**4.** Koordinaten-Meßmaschine nach den Ansprüchen 1 und 3,
dadurch gekennzeichnet,
daß die zweite Riemenscheibe (19) mit der Bremsscheibe (20) auf der Gewindespindel (4) durch eine Spannhülse (21) gesichert ist.

**5.** Koordinaten-Meßmaschine nach den Ansprüchen 1, 3 und 4,
dadurch gekennzeichnet,
daß die zweite Riemenscheibe (19) und die Bremsscheibe (20) auf der Gewindespindel (4) zusätzlich durch eine Mitnehmerscheibe (22) gesichert ist, die in eine in der Gewindespindel (4) eingearbeitete Längsnut (24) eingreift.

**6.** Koordinaten-Meßmaschine nach Anspruch 1,
dadurch gekennzeichnet,
daß für die Überwachung der Riemenspannung und Riemenbewegung ein Sicherheitsendlagerschalter (33) in Verbindung mit einem Doppelkugellager (31) am Riemen (18) angebaut ist.

**7.** Koordinaten-Meßmaschine nach den Ansprüchen 1 und 6,
dadurch gekennzeichnet,
daß der Riemenspanner ein Winkelhebel (27) ist, der unter Federkraft am Riemen (18) mit einer Rolle oder einem Laufrad oder direkt mit einem Doppel-Kugellager (31) anliegt und über eine zentrale Achse (30) schwenkbar ist.

## Claims

**1.** Coordinate measuring machine, having a drive and braking device for the sleeve (3) which may traverse in the Z direction by means of a threaded spindle (4), characterized in that the motor output shaft (16) and the threaded spindle (4), which are arranged axially parallel to one another, are in drive connection with one another by means of a belt drive (16, 18, 19) having a belt tensioning and monitoring device (25, 26), there being flanged onto the belt wheel (19) for driving the threaded spindle (4) a brake disc (20) on which brake discs (25') of a brake clasp (26') or disc brake act.

**2.** Coordinate measuring machine according to Claim 1, characterized in that the belt disc (17) which is mounted on the motor output shaft (16) may be displaced transversely with respect to the longitudinal axis of the motor output shaft (16) by means of a motor plate (10) which may be moved and fixed in elongate holes (13).

**3.** Coordinate measuring machine according to Claim 1, characterized in that the second belt disc (19) is non-rotatably mounted, jointly with the brake disc (20) which is non-rotatably flanged thereon, on the threaded spindle (4) of the sleeve (3).

**4.** Coordinate measuring machine according to Claims 1 and 3, characterized in that the second belt disc (19) having the brake disc (20) is secured on the threaded spindle (4) by means of a clamping sleeve (21).

**5.** Coordinate measuring machine according to Claims 1, 3 and 4, characterized in that the second belt disc (19) and the brake disc (20) are secured on the threaded spindle (4) in addition by means of a driver plate (22) which engages in a longitudinal groove (24) which is made in the threaded spindle (4).

**6.** Coordinate measuring machine according to Claim 1, characterized in that a safety limit position switch (33) in connection with a double ball bearing (31) is mounted on the belt (18), for monitoring the tension and movement of the belt.

**7.** Coordinate measuring machine according to Claims 1 and 6, characterized in that the belt tensioning means is an elbow lever (27) which bears by spring force against the belt (18) by means of a roller or a running wheel or directly by means of a double ball bearing (31) and may be pivoted by way of a central axle (30).

## Revendications

**1.** Machine de mesure de coordonnées, comprenant un système d'entraînement et de freinage du fourreau de contre-pointe (3) déplaçable dans le sens Z au moyen d'une broche filetée (4), caractérisée en ce que l'arbre de sortie de moteur (16) et la broche filetée (4), dont les axes sont parallèles l'un à l'autre, sont entraînés ensemble par un entraînement à courroie (16, 18, 19) comportant un système de tension et de surveillance de courroie (25, 26), un disque de freinage (20) sur lequel agissent des mâchoires de freinage (25') d'une griffe de freinage (26') ou d'un frein à disque étant bridé sur le volant (19) d'entraînement de la broche filetée (4).

2.   Machine de mesure de coordonnées selon la revendication 1, caractérisée en ce que la poulie (17) montée sur l'arbre de sortie de moteur (16) peut être réglée transversalement à l'axe longitudinal de l'arbre de sortie de moteur (16) au moyen d'un socle de moteur (10) pouvant être déplacé et immobilisé dans des trous oblongs (13).

3.   Machine de mesure de coordonnées selon la revendication 1, caractérisée en ce que la seconde poulie (19), avec le disque de freinage (20) qui y est bridé de manière solidaire en rotation, est liée en rotation avec la broche filetée (4) du fourreau de contre-pointe (3).

4.   Machine de mesure de coordonnées selon les revendications 1 et 3, caractérisée en ce que la seconde poulie (19) associée au disque de freinage (20) est bloquée sur la broche filetée (4) par un manchon de serrage (21).

5.   Machine de mesure de coordonnées selon les revendications 1, 3 et 4, caractérisée en ce que la seconde poulie (19) et le disque de freinage (20) sont également bloqués sur la broche filetée (4) par un plateau d'entraînement (22) qui s'engage dans une rainure longitudinale (24) pratiquée dans la broche filetée (4).

6.   Machine de mesure de coordonnées selon la revendication 1, caractérisée en ce que, pour surveiller la tension et le déplacement de la courroie, il est prévu un commutateur de position extrême de course (33) associé à un double roulement à billes (31) appliqué contre la courroie (18).

7.   Machine de mesure de coordonnées selon les revendications 1 et 6, caractérisée en ce que le tendeur de courroie est un levier coudé (27) qui est appliqué, sous une force élastique, contre la courroie (18) avec un galet ou une roue mobile, ou directement avec un double roulement à billes (31), et qui peut pivoter par l'intermédiaire d'un axe central (30).

FIG.1

FIG.3

FIG.2